# EUROPEAN PATENT SPECIFICATION

(11) **EP 0 793 385 B1**
(45) Date of publication and mention of the grant of the patent: **29.06.2011**
(21) Application number: 96103426.1
(22) Date of filing: 05.03.1996
(51) Int. Cl.: H04N 7/088

(54) **Method for providing recording-reservation data to a VCR using a TV and TV & VCR adapted thereto**
Verfahren zur Bereitstellung von Aufnahme-/Reservierungsdaten für einen Videokassettenrecorder unter Verwendung eines Fernsehers und daran angepasster Fernseher und Videokassettenrecorder
Méthode pour fournir des données d'enregistrement/réservation à un magnétoscope utilisant une télévision et une télévision avec magnétoscope lui étant adaptés

(30) Priority: 27.02.1996 KR 9604837
(43) Date of publication of application: 03.09.1997
(73) Proprietor: LG Electronics Inc., Youngdungpo-ku Seoul (KR)
(72) Inventor: Huh, Chung Hyoea, Suwon-si, Kyungki-do (KR)
(74) Representative: Vossius & Partner

(56) References cited:
- WO-A-95/31068
- GB-A- 2 285 191
- US-A- 5 390 027

## Description

The present invention relates to a method for providing recording-reservation data to a VCR (Video Cassette Recorder) using a TV (television), and the TV and VCR adapted thereto.

US-A-5,390,027 discloses a television program recording and reproducing system which uses program data of text broadcast signal. A text broadcast receiver comprises a data extraction section for extracting the text broadcast signal from a video signal. The text broadcast receiver further comprises a program table data memory which stores television program table data. A recording reservation command section such as a remote control device produces a command signal specifying a recording reservation for a television program. A recording reservation setting section searches when the user enters a recording reservation by means of the recording reservation command section the contents of the program table data memory. A display controller displays data from the recording reservation setting section.

In accordance with conventional methods heretofore, a user provides all recording-reservation data to a VCR by manipulating a VCR.

That is, the VCR has been the main subject when performing a recording reservation mode.

Also, regarding the conventional methods, the recording reservation mode is carried out by means of informations separately loaded on partial lines of broadcasting signals.

The separate informations are supplied from broadcasting stations, which are separately loaded on the partial lines of the broadcasting signals apart from video signals.

For example, individual information loaded on the broadcasting signals by the broadcasting stations of Europe will be briefly introduced below.

First, there is a teletext signal. The teletext signal is loaded on partial lines of the broadcasting signals, which consists of digital data corresponding to characters or graphics.

The teletext signal includes news information, stock information, entertainment information, leisure information, sports information, TV guide information, and the like.

The broadcasting stations of Europe currently provide information corresponding to 100-999 pages using the teletext signal, and each page is comprised of a sub-page and a multipage to additionally afford detailed information.

A video programmable teletext (hereinafter referred to as "VPT") information is one included in the teletext signal.

The VPT which denotes TV program guide information supplies detailed information about broadcasting programs.

Accordingly, the recording reservation mode in the VCR can be performed more easily by means of the VPT information.

Second, a video program service (hereinafter referred to as "VPS") signal will now be mentioned.

The VPS signal is generally loaded on the 16th line of the broadcasting signal in the form of a digital signal, which provides the video program information of respective broadcasting signals.

This signal assist the VCR to execute the preprogrammed recording of a desired program more accurately.

The VPS signal is formed of codes of various kinds.

The codes include a general code, an interrupt code, a dummy code, a system code, etc.

The general code is relating to a preprogrammed-recording start time of a desired broadcasting program, and the interrupt code is of notifying a section of a broadcasting signal such as advertising broadcasting unrelated to an actual broadcasting program. The dummy code is relating to an ending time of the desired broadcasting program, and system code is a kind of instruction code of performing the preprogrammed-recording of the desired program by using the time preset in the VCR.

As stated above, the VPS signal chiefly supplies the starting time information and ending time information of the broadcasting program for executing the preprogrammed recording to the VCR.

Third, a program delivery control (hereinafter referred to as "PDC") signal will be described.

The PDC signal is almost similar to the VPS signal.

But the PDC signal further includes a continuous code in addition to the codes of the VPS signal.

The continuous signal is of informing of the continuation of the desired broadcasting program.

In more detail, when a sport game is subjected to a relay broadcast, it may be continued over a regular relay broadcasting time.

Then, the play exceeding the regular relay broadcasting time may be broadcasted via another broadcasting station.

The continuous code is of announcing such information. Therefore, the PDC signal is utilized to enable the VCR to thoroughly carry out the preprogrammed reservation of the desired sport game.

According to the conventional methods, the VCR must be equipped with a decoder for detecting individual informations from a broadcasting signal so as to use the individual informations provided from the broadcasting stations in the preprogrammed recording mode or recording reservation mode.

Substantially, since the decoder is an expensive element, the burdensome manufacturing cost of the VCR increased due to incorporating decoders which detect individual informations provided from broadcasting stations has been shouldered.

Conventional VCRs can be classified into diverse types: e.g., VCRs having a simple function without involving any decoders, VCRs having a VPS decoder, VCRs having an auto channel mapping system (hereinafter referred to as "ACMS") and VCRs having both VPS decoder and ACMS.

Here, the ACMS is employed for adjusting respective broadcasting channel numbers to be suitable for the corresponding area where the VCR is placed, and mapping the original channel number to the adjusted channel number to provide the mapped channel tuning data.

For example, the broadcasting signal of a certain broadcasting station is received in the channel number of "10" which may be "11" in another area besides the center.

In this case, the ACMS searches out the adjustment number of "11" and supplies the channel tuning data consisting of "10" and "11."

When the recording reservation mode is performed by means of the above-described conventional VCRs, following problems are incurred.

First, in order to carry out the recording reservation mode or preprogrammed-recording mode by using all individual informations supplied from the broadcasting stations, the decoder or other elements for detecting the informations should be furnished to considerably heighten the manufacturing cost of the VCR.

Second, a case of including the teletext signal into the construction of the VCR involves somewhat unreasonableness such that the teletext decoder is repeatedly adopted for executing the recording reservation mode since almost all TV receivers are already equipped with the teletext decoder capable of detecting the teletext signal.

Third, in association with the VCRs having partial decoders for detecting individual informations, the user has an inconvenience to manually provide the recording-reservation data which is not supplied by the partial decoders to the VCR one by one.

Fourth, since the main subject of performing the recording reservation mode has been the VCR in accordance with the conventional methods, the user must manipulate the TV as well as the VCR in order to consult the TV guide information in the teletext signal when performing the recording reservation mode.

Consequently, there has been the inconvenience of manipulating the TV as well as the VCR for executing the recording reservation mode.

It is an object of the present invention to provide a method for providing timer recording-reservation data to a VCR using a TV capable of conveniently performing a reservation mode.

It is another object of the present invention to provide a TV adapted to the above method.

It is still another object of the present invention to provide a VCR adapted to the above method capable of significantly lowering manufacturing cost.

### BRIEF DESCRIPTION OF THE DRAWINGS

The above objects and other advantages of the present invention will become more apparent by describing in detail preferred embodiments thereof with reference to the attached drawings in which:
FIG. 1 is a flow chart showing a method for providing recording-reservation data to a VCR using a TV according to the present invention;
FIG. 2A is a block diagram showing a construction of the TV, VCR and a bilateral communicating interface section for connecting these adapted to the method of FIG. 1;
FIG. 2B is a block diagram showing another embodiment of the bilateral communicating interface section of FIG. 2A;
FIG. 3 is a block diagram showing the construction of the TV, VCR and bilateral communicating interface section for connecting these according to a first embodiment of the present invention;
FIG. 4A is a flow chart showing one system program of the TV according to the first embodiment of the present invention;
FIG. 4B is a flow chart showing one system program of the VCR according to the first embodiment of the present invention;
FIG. 5 is a diagram showing a formatted construction of recording-reservation informations transmitted from the TV to VCR;
FIG. 6A is a flow chart showing another system program of the TV according to the first embodiment of the present invention;
FIG. 6B is a flow chart showing another system program of the VCR according to the first embodiment of the present invention;
FIG. 7 is a diagram showing one example of the TV screen displayed with the TV guide information;
FIG. 8 is a block diagram showing a construction of the TV, VCR and bilateral communicating interface section according to a second embodiment of the present invention;
FIG. 9A is a flow chart showing one system program of the VCR according to the second embodiment of the present invention;
FIG. 9B is a flow chart showing another system program of the VCR according to the second embodiment of the present invention;
FIG. 10 is a block diagram showing a construction of the TV, VCR and bilateral communicating interface section according to a third embodiment of the present invention;
FIG. 11A is a flow chart showing one system program of the VCR according to the third embodiment of the present invention;
FIG. 11B is a flow chart showing another system program of the VCR according to the third embodiment of the present invention;
FIG. 12 is a block diagram showing a construction of the TV, VCR and bilateral communicating interface section according to a fourth embodiment of the present invention;
FIG. 13A is a flow chart showing one system program of the VCR according to the fourth embodiment of the present invention; and
FIG. 13B is a flow chart showing another system program of the VCR according to the fourth embodiment of the present invention.

### DETAILED DESCRIPTION OF THE PREFERRED EMBODIMENTS

Hereinbelow, a method for providing recording-reservation data to a VCR using a TV, and constructions of the TV and VCR adapted to the method according to the present invention will be described in detail with reference to accompanying drawings.

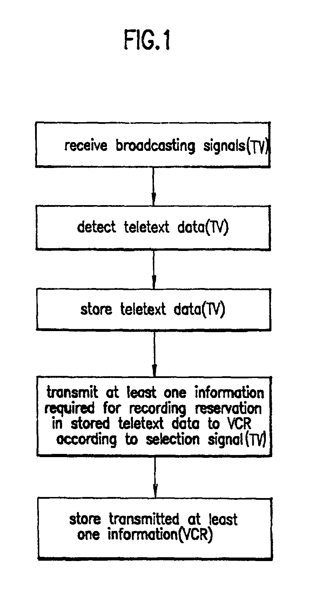

FIG. 1 is a schematic flow chart showing the method for providing the recording-reservation data to the VCR using the TV according to the present invention.

Referring to FIG. 1, broadcasting signals are first received via the TV.

Successively, teletext data consisting of a plurality of information is detected from the received broadcasting signals, and the detected teletext data is stored in a memory of the TV.

In the teletext data stored in accordance with a selection signal supplied to the TV, at least one information required for recording reservation is transmitted to the VCR.

The transmitted at least one information is stored in a memory of the VCR as the recording-reservation data.

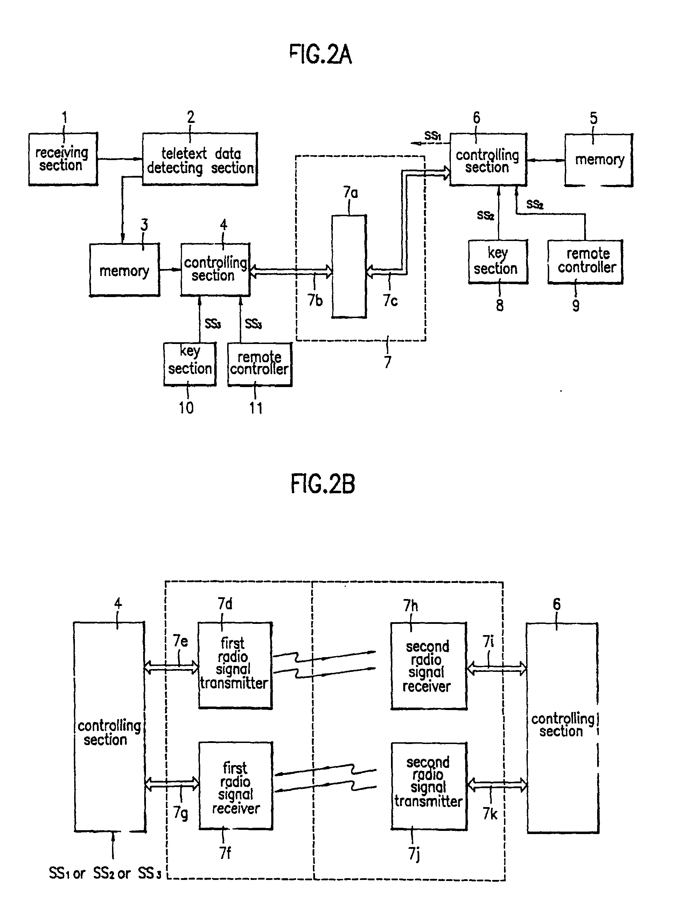

FIG. 2A is a block diagram showing the main construction of the TV, VCR and an interface section which interfaces the TV and VCR to enable bilateral communication.

FIG. 2B is a block diagram showing another embodiment of the interface section of FIG. 2A.

Referring to FIG. 2A, the TV includes a receiving section 1 for receiving the broadcasting signals via an antenna, a teletext data detecting section 2 for detecting the teletext data consisting of informations of plural kinds from the received broadcasting signals, and a memory 3 for storing the detected teletext data. In addition to these, a controlling section 4 takes at least one information in the teletext data stored in memory 3 out of memory 3 as the recording-reservation data in response to one selection signal supplied.

Meanwhile, the VCR has a memory 5 and a controlling section 6 for receiving the recording-reservation data transmitted from the TV to store the received data in memory 5.

In FIG. 2A, an interface section 7 includes a bilateral communicating jack 7a, a first bilateral communicating bus 7b for connecting controlling section 4 of the TV and bilateral communicating jack 7a, and a second bilateral communicating bus 7c for connecting controlling section 6 of the VCR and bilateral communicating jack 7a.

Here, a scart jack may be applied as bilateral communicating jack 7a, and inter IC (I²C) bus may be applied as first and second buses 7b and 7c.

The interface section can belong to the construction of either TV or VCR.

In FIG. 2A, a reference numeral SS₁ denotes any one selection signal among three kinds supplied to the controlling section 4 of the TV, which is intrinsically provided from controlling section 6 of the VCR.

A reference numeral SS₂ is the other selection signal of the three kinds, which is supplied to controlling section 4 of the TV via the VCR in conformity with a user's selection.

That is, the user provides selection signal SS₂ via a key section equipped to a panel (not shown) of the VCR or a key section (not shown) provided to a remote controller.

A reference numeral SS₃ is the third selection signal of the three kinds, which is directly supplied to controlling section 4 of the TV by the user's selection without passing through the VCR.

In other words, the user supplies selection signal SS₃ via the key section furnished to the panel of the TV or that of the remote controller.

Above-stated selection signals SS₁∼SS₃ are signals for selecting at least one information required for preprogramming the recording reservation of the VCR out of the detected teletext data. Here, only one signal among the three is supplied to controlling section 4 of the TV by the selection within the VCR or the user.

It should be noted that, selection signal SS₁ is previously stored in controlling section 6 of the VCR in accordance with the characteristic of the VCR to be automatically supplied to controlling section 4 of the TV without the user's selection. Also, selection signals SS₂ and SS₃ are produced by a key signal which is manually supplied by the user to controlling section 4 of the TV by means of the key section or remote controller of the TV and VCR in view of the teletext displayed on the TV screen.

Further description with respect to signals SS1-SS3 will be given later in relation with the operation description.

In FIG. 2A, reference numerals 8 and 9 denote the key section provided to the panel of the VCR and remote controller.

Reference numerals 10 and 11 denote the key section and remote controller of the TV, respectively.

FIG. 2B is a block diagram showing another embodiment of interface section 7.

While interface section 7 shown in FIG. 2A is in the form of wired connection, that shown in FIG. 2B has radio communication pattern.

In FIG. 2B, interface section 7 includes a first radio signal transmitter 7d for converting at least one information from controlling section 4 of the TV into the form of a radio signal to transmit the result to the VCR side, a third bus 7e for connecting controlling section 4 of the TV and a first radio signal receiver 7f for receiving the radio signal from the VCR to transmit the result to controlling section 4. Also, a fourth bus 7g connects first radio signal receiver 7f and controlling section 4, a second radio signal receiver 7h transfers the radio signal from first radio signal transmitter 7d to controlling section 6 of the VCR, and a fifth bus 7i connects second radio signal receiver 7h and controlling section 6 of the VCR. In addition, interface section 7 has a second radio signal transmitter 7j for converting the signal from controlling section 6 in the form of the radio signal to transmit the result toward the TV, and a sixth bus 7k for connecting second radio signal transmitter 7j and controlling section 6 of the VCR.

In FIG. 2B, third to sixth buses 7e, 7g, 7i and 7k employ an unilateral communicating bus rather than bilateral communicating bus.

Here, the signal from controlling section 6 of the VCR to second radio signal transmitter 7j is either one of selection signals SS₁ and SS₂.

Now, embodiments of the present invention will be described in detail.

### First Embodiment

The first embodiment shows a case where the method according to the present invention is adapted to the VCR having a simple function.

The VCR having the simple function denotes the VCR having the basic function of VCRs, i.e., the recording function and play function.

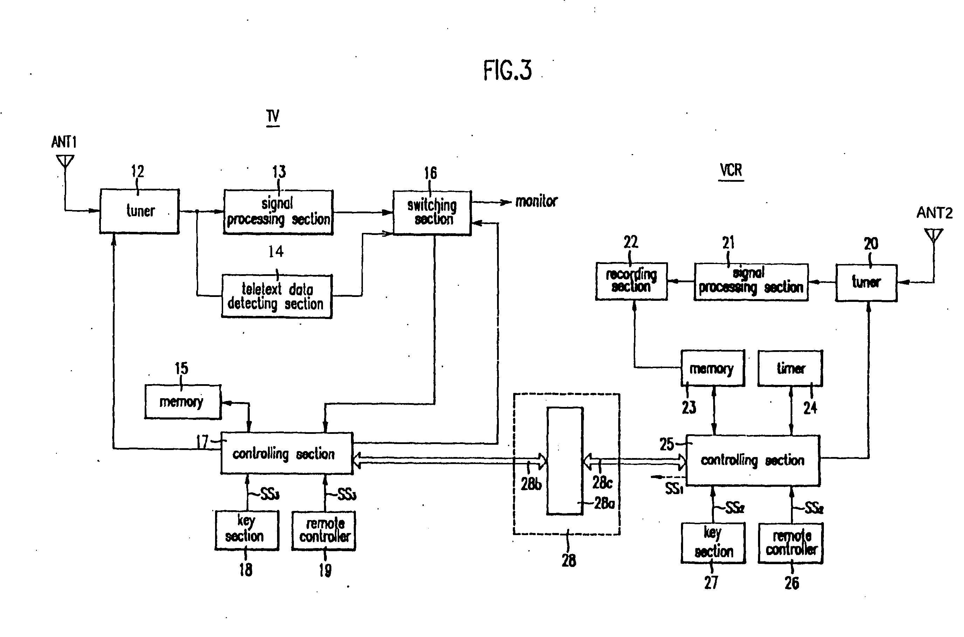

FIG. 3 is a block diagram showing the construction of the TV, VCR and interface section for connecting these according to the first embodiment.

In FIG. 3, the TV has an antenna ANT1, and a tuner 12 for tuning a single broadcasting signal among the broadcasting signals received via antenna ANT1 in accordance with a tuning signal. Besides, a signal processing section 13 processes the tuned broadcasting to be displayed, and a teletext data detecting section 14 detects teletext data from the tuned broadcasting signal. A memory 15 stores the teletext data in accordance with a memory control signal, and a switching section 16 provides either one of the broadcasting signal from signal processing section 13 and the teletext data from teletext detecting section 14 to a monitor in accordance with a switching control signal. The tuning signal, memory control signal and switching control signal are supplied by a controlling section 17 which also produces at least one information required for recording reservation of the VCR in the teletext data stored in memory 15 in accordance with the supplied selection signal (any one among SS₁, SS₂ and SS₃). A key section 18 placed to a panel of the TV provides a key signal for generating selection signal SS₃ to controlling section 17 by a user through wired connection, and a remote controller 19 supplies the key signal for generating selection signal SS₃ to controlling section 17 in radio transmission pattern by the user.

Referring to FIG. 3, the VCR adapted to the method according to the present invention is comprised of an antenna ANT2, and a tuner 20 for tuning only one broadcasting signal among broadcasting signals received via antenna ANT2 in accordance with a tuning control signal. In addition, a signal processing section 21 processes the tuned broadcasting signal to be recorded, and a recording section 22 records the recordably-processed broadcasting signal in accordance with a record control signal onto one recording medium. Also, a memory 23 stores at least one recording-reservation information transmitted from the TV in accordance with a memory control signal, a timer 24 supplies time information, and a controlling section 25 provides the memory control signal, tuning control signal and record control signal, and supplies selection signal SS₁ previously stored therein to the TV. A key section 27 supplies the key signal for generating selection signal SS₂ to controlling section 25 of the VCR through the wired connection in accordance with the user's selection, and a remote controller 26 provides the key signal for generating selection signal SS₁ to controlling section 25 of the VCR in the radio transmission pattern by the user's selection.

In FIG. 3, interface section 28 is formed of a bilateral communicating scart jack 28a, a first I²C bus 28b as the bilateral communicating bus for connecting controlling section 17 of the TV and scart jack 28a and a second I²C bus 28c for connecting controlling section 25 of the VCR and scart jack 28a.

Here, interface section 28 may belong to the construction of the TV or of the VCR.

As illustrated in FIG. 2B, interface section 28 may be constructed by two radio signal transmitters and two radio signal receivers.

At this time, one radio signal transmitter and one radio signal receiver substantially belong to the construction of the TV, and the other radio signal transmitter and radio signal receiver belong to the construction of the VCR.

Here, the radio signal has the form of an infrared ray signal.

In the construction of the TV shown in FIG. 3, controlling section 17 supplies date information, broadcasting program start information, broadcasting program ending information and channel tuning information in the teletext data stored in memory 15 to the VCR via scart jack 28a as the recording-reservation data of the VCR.

At this time, controlling section 17 confirms that the VCR interfaced with selection signal (any one among SS₁, SS₂ and SS₃) has the simple function by the selection signal, and provides the recording-reservation data suitable for the VCR having the simple function to the VCR.

Among selection signals SS₁∼SS₃, selection signal SS₁ previously stored within controlling section 25 of the VCR is automatically supplied to controlling section 17 of the TV, whereas selection signals SS₂ and SS₃ are supplied to controlling section 17 of the TV by the selection of the user as stated above.

Therefore, it is needed to display the teletext data stored in memory 15 of the TV on a TV screen (i.e., monitor) so as to supply selection signals SS₂ and SS₃ desired by the user.

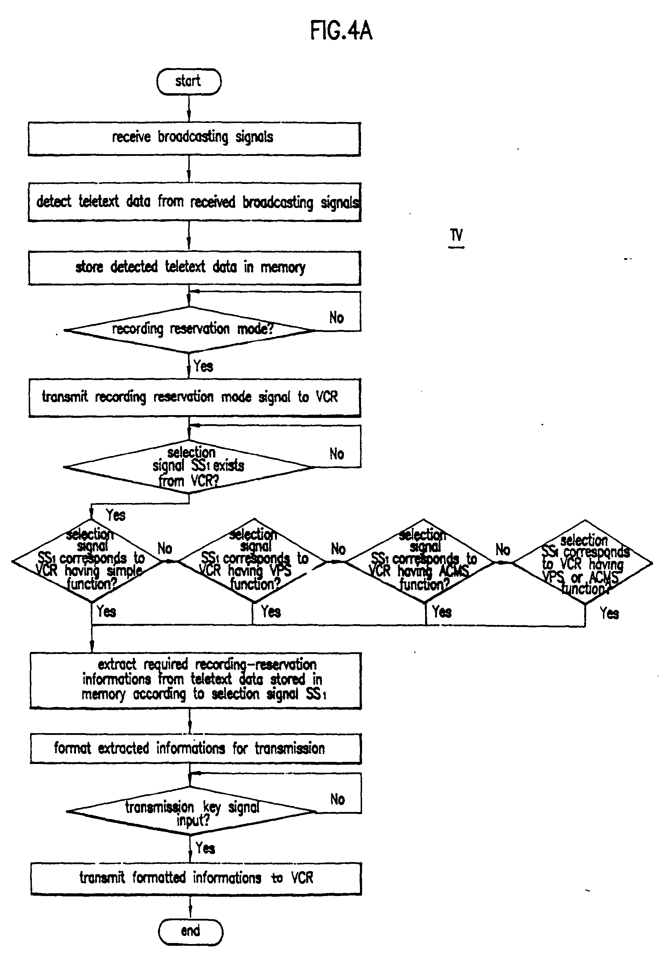

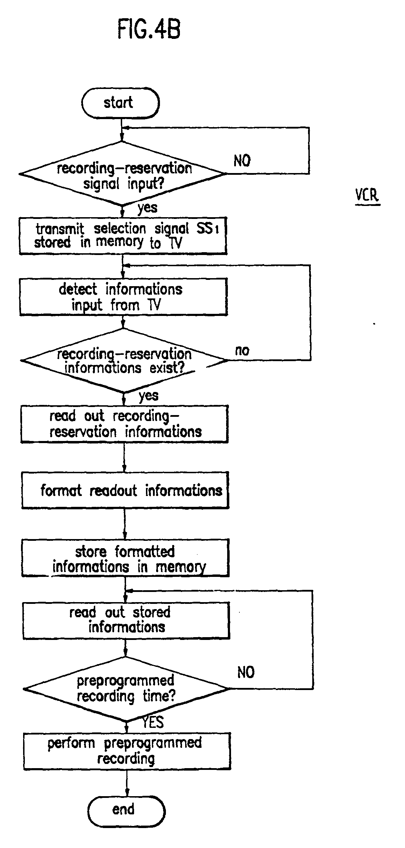

First of all, a case of supplying selection signal SS₁ previously stored within the VCR to the TV will be described with reference to FIGS. 3, 4A and 4B.

Referring to FIG. 4A, the TV receives the broadcasting signals in order via antenna ANT1 and detects the teletext data from them to store the result in memory 15.

Successively, it is checked whether the signal of recording reservation mode is provided by the user or not.

Upon the supply of the signal of recording reservation mode by the user, controlling section 17 of the TV provides the signal of record reservation mode to the VCR side.

In FIG. 4B, once the signal of recording reservation mode is received from the TV, the VCR transmits selection signal SS₁ stored in memory 23 to the TV side via scart jack 28a of interface section 28.

At this time, selection signal SS₁ is the signal which informs of the VCR having the simple function to the TV.

Successively, as illustrated in FIG. 4A, when selection signal SS₁ is received from the VCR to controlling section 17 of the TV via scart jack 28a, the TV checks to determine selection signal SS₁ under which kind of VCR.

That is to say, controlling section 17 of the TV checks whether selection signal SS₁ corresponds to the VCR having the simple function, VCR having the VPS function, VCR having the ACMS function, and VCR having both VPS function and ACMS function.

In this embodiment, the TV recognizes that selection signal SS₁ corresponds to the VCR having the simple function.

Accordingly, controlling section 17 of the TV extracts at least one information, i.e., date information, broadcasting program starting time information, broadcasting program ending time information and channel tuning information required for the recording reservation of the VCR having the simple function from the teletext data stored in memory 15.

Then, the extracted information is formatted in a prearranged pattern for the transmission.

The informations formatted as above sequentially pass through first I²C bus 28b, scart jack 28a and second I²C bus 28c to the VCR side when a transmission key signal is supplied by the user to controlling section 17 via key section 18 or remote controller 19.

Of course, the formatted information may be transmitted to the VCR side in the radio transmission pattern as shown in FIG. 2B.

Thereafter, as shown in FIG. 4B, controlling section 25 of the VCR receives informations from the TV via scart jack 28a shown in FIG. 3 or second radio signal receiver 7h shown in FIG. 2B, and checks whether recording-reservation information exists in the received informations or not.

If the recording-reservation informations exist, the informations are read out to be formatted in the pattern for the recording reservation and, then, is stored in memory 23.

After that, the stored recording-reservation informations are read out by controlling section 25 to perform the recording, and controlling section 25 checks whether the current time is the preprogrammed recording time or not by means of the informations.

Then, the recording is executed upon reaching the preprogrammed recording time, and the system program is finished.

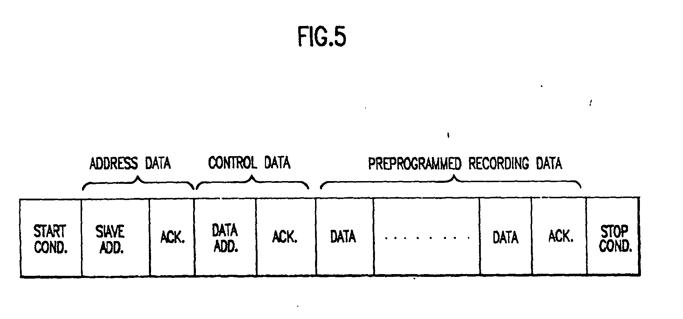

FIG. 5 is a diagram showing the formatted construction of the recording-reservation informations transmitted from the TV to VCR.

As shown in FIG. 5, the formatted construction includes start cond., address data, control data, recording-reservation data and stop cond.

Here, "Start Cond." refers protocol data which notifies the start of information transmission via the I²C bus.

"Slave add" denotes data of designating the corresponding apparatus, which sets the VCR address herein.

"Data Add" of the control data is data for controlling the corresponding apparatus.

Recording-reservation data is at least one information in conformity with selection signals SS₁∼SS₃.

As mentioned above, the recording-reservation informations in the first embodiment are the date information, desired broadcasting program starting time information, desired broadcasting program ending time information and channel tuning information.

In FIG. 5, "Stop Cond." is the protocol data which informs of the completion of the information transmission via the I²C bus.

"ACK" inserted to respective ending portions of the address data, control data and recording-reservation data is supplied from the VCR side to TV side, which is a signal for acknowledging the safe reception of the transmitted informations.

Bilateral communicating scart jack 28a shown in FIG. 3 typically has 21 pins among which 8th and 12th pins are employed in the embodiments of the present invention.

One between the two pins is utilized for transmitting the recording-reservation data via the bilateral communicating I²C bus, and the other one is for transmitting the control data via the I²C bus.

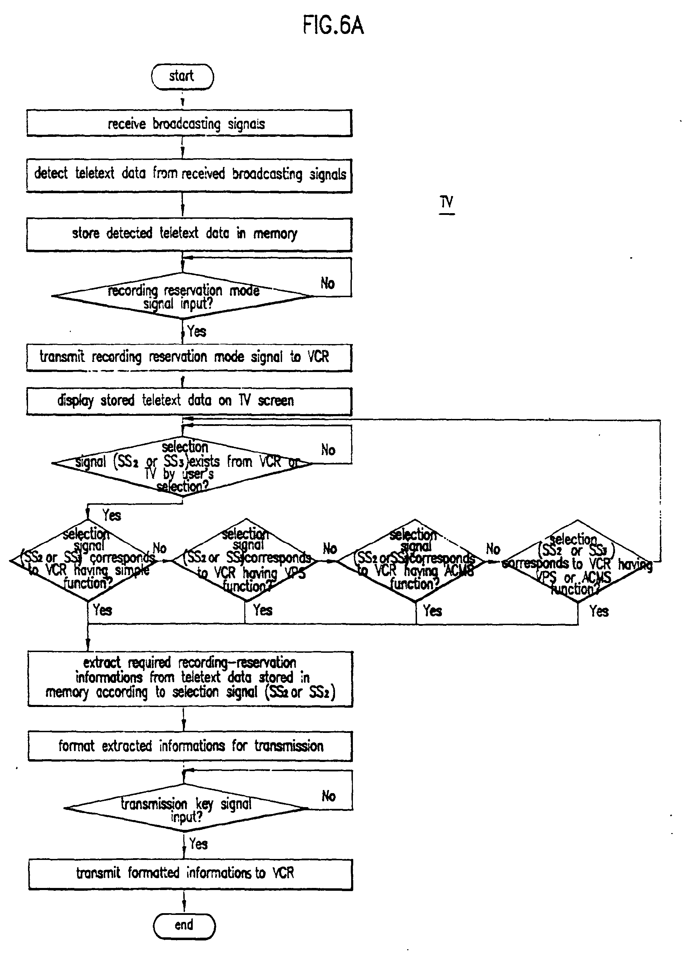

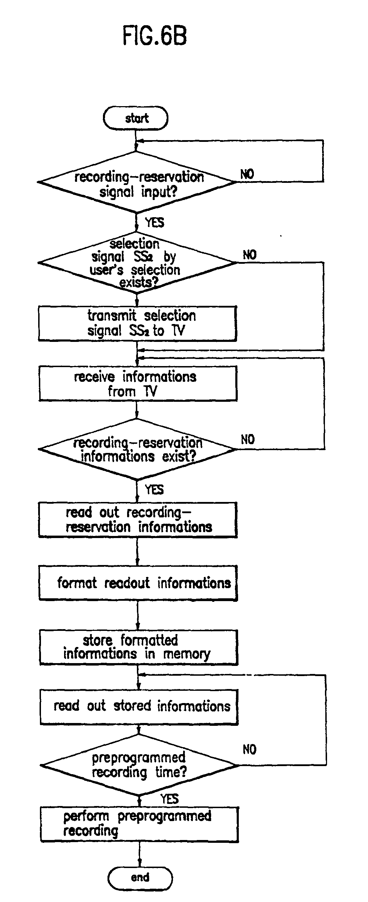

FIGS. 6A and 6B are flow charts for showing a case that selection signals SS₂ and SS₃ which are not previously stored within the VCR but supplied by the user are provided to the TV.

As shown in FIG. 6A, the TV first receives the broadcasting signals, and detects the teletext data from the received broadcasting signals.

Thereafter, the detected teletext data is stored in memory 15 of FIG. 3.

Successively, it is checked whether the signal of the recording reservation mode is produced by the user.

If the signal of recording reservation mode is received, the identical signal of recording reservation mode is transmitted to controlling section 25 of the VCR via the radio signal transmitter or scart jack 28a shown in FIG. 3.

Then, TV guide informations required for the recording reservation in the teletext data stored in memory 15 of the TV is displayed on the TV screen (or monitor).

At this time, the user can provide desired selection signal SS₃ to controlling section 17 of the TV via key section 18 or remote controller 19 of the TV in consideration of the TV guide information displayed on the TV screen.

Additionally, the user may provide desired selection signal SS₂ to controlling section 17 of the TV via key section 27 or remote controller 26 of the VCR.

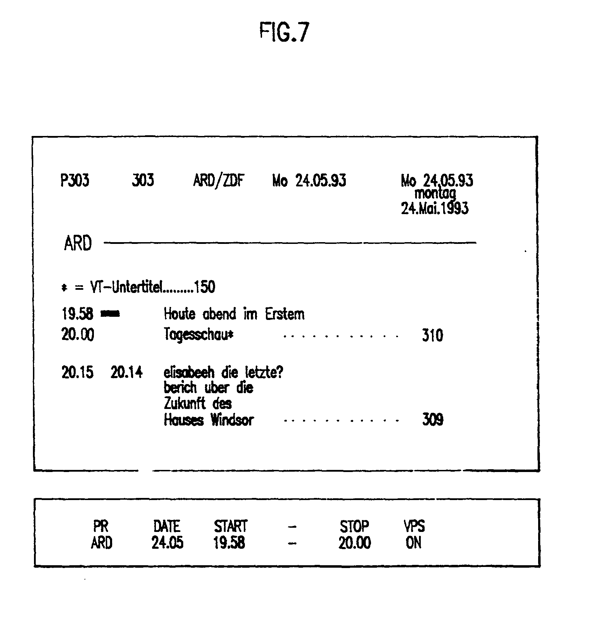

FIG. 7 illustrates one example of the TV screen displayed with the TV guide information.

The TV screen illustrated in FIG. 7 is the TV guide information included in the teletext data supplied from the ARD broadcasting station, Germany.

In FIG. 7, "P303 and 303" placed on the left uppermost side of the screen designate the column corresponding to the TV guide information, and "ARD/ZDF" are the name of the broadcasting station on the TV guide.

"MO 24.05.93" designates the present date, and "14:34:24" is the current time.

"Montag, 24, Mai, 1993" on the right uppermost side designates the calendar.

"ARD" disposed on the left upper side designates an actual name of the broadcasting station.

"+-VT-Untertitel....150" denotes corresponding information column of the teletext data, and "19.58, 20.00 and 20.15" designate starting times of the broadcasting programs.

"20.14" designates initial recognition information of the broadcasting program, i.e., conceal information.

"Heute abend im Erstem" and the like placed on the right of respective broadcasting starting times represent the names of respective broadcasting programs corresponding to respective broadcasting starting time.

"310 and 309" are numbers designating a page and the succeeding page corresponding to respective broadcasting programs.

Also, "PR, Date Start, Stop and VPS" placed on the lowermost end of the TV screen designate recording-reservation data selected by the user using a cursor on the TV screen.

Here, "PR" denotes the name of the broadcasting station, "Date" is the recording-reservation date, "Start" is the starting time of the corresponding broadcasting program, "Stop" is the ending time of the corresponding broadcasting program and "VPS" is the on/off of the recording reservation mode.

In view of the TV guide information displayed on the TV screen, the user can provide selection signal SS₂ to controlling section 17 of the TV via the VCR or directly provide selection signal SS₃ to controlling section 17 of the TV on the TV.

In this embodiment, both selection signals SS2 and SS3 correspond to the VCR having the simple function.

Back to FIG. 6B, the VCR checks whether selection signal SS₂ by the selection of the user exists or not when the signal of recording reservation mode is supplied from the TV side.

In case of lacking selection signal SS₂, it is regarded that the user directly provides selection signal SS₃ to controlling section 17 of the TV.

Otherwise, if selection signal SS₂ exists, selection signal SS₂ is transmitted to controlling section 17 of the TV via scart jack 28a or second radio signal transmitter 7j shown in FIG. 2B.

Successively, controlling section 17 of the TV checks whether selection signal SS₂ or SS₃ by the user's selection is supplied thereto or not in FIG. 6A.

When selection signal SS₂ or SS₃ is supplied, it is checked whether the selection signal corresponds to the VCR having the simple function, VCR having the VPS function, VCR having the ACMS function or VCR having both ACMS and VPS functions.

In accordance with checked selection signal SS₂ or SS₃, at least one information required for the recording reservation is extracted from the teletext data stored in memory 15.

Since the method according to the present invention is adapted to the VCR having the simple function in the first embodiment, the extracted informations in the first embodiment are the date information, broadcasting program starting time information, broadcasting program ending time information and channel tuning information as described above.

Thereafter, the extracted informations are formatted in the pattern as shown in FIG. 5.

Controlling section 17 transmits the formatted informations to controlling section 25 of the VCR via scart jack 28a or first radio signal transmitter 7d of FIG. 2B upon the reception of the transmission key signal by the user.

Again referring to FIG. 6B, controlling section 25 of the VCR receives the informations transmitted from the TV via scart jack 28a or second radio signal receiver after transmitting selection signal SS₂ to the TV.

Then, controlling section 25 checks whether the recording-reservation information exists in the received informations.

If exist, the informations are read out to be formatted for performing the recording, and stored in memory 23.

After this, controlling section 25 of the VCR reads out the recording-reservation informations stored in memory 23 to check whether the time becomes the preprogrammed recording time or not.

When reaching the preprogrammed recording time, controlling section 25 of the VCR carries out the recording of the reserved program.

### Second Embodiment

The second embodiments shows a case that the method according to the present invention is adapted to the VCR having the VPS function.

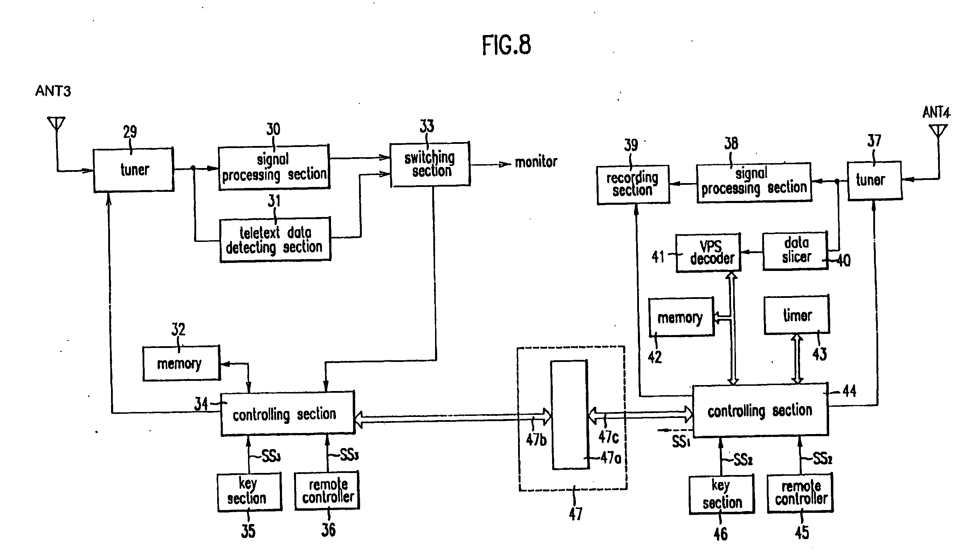

FIG. 8 is a block diagram showing a construction of the TV, VCR and an interface section for connecting them according to the second embodiment.

Referring to FIG. 8, the TV adapted according to the present invention includes an antenna ANT3, a signal processor 30, a teletext data detecting section 31, a memory 32, a switching section 33, a controlling section 34, a key section 35 and a remote controller 36.

The construction of the TV shown in FIG. 8 is the same as that shown in FIG. 3.

Therefore, the detailed description of the construction of the TV will be omitted.

In FIG. 8, the VCR includes an antenna ANT4, and a tuner 37 for tuning a single broadcasting signal among the broadcasting signals received via antenna ANT4 in accordance with a tuning control signal. Besides, a signal processing section 38 processes the tuned broadcasting to be recordable, and a recording section 39 records the broadcasting signal from signal processing section 38 on one recording medium. A data slicer 40 slices the tuned broadcasting signal, and a VPS decoder 41 detects a VPS signal from the sliced broadcasting signal by means of a decoding control signal. A memory 42 stores the VPS signal and recording-reservation informations transmitted from the TV in accordance with a memory control signal, and a timer 43 provides time information to a controlling section 44 when the VPS signal is absent. The decoding control signal, memory control signal and previously-stored selection signal SS₁ are supplied by controlling section 44. Additionally, the VCR includes a remote controller 45 for supplying a key signal for generating selection signal SS₂ to controlling section 44 by the user's selection in the radio transmission pattern and a key section 46 for providing the key signal for generating selection signal SS₂ to controlling section 44 through wired connection by the user's selection.

Identical to the first embodiment, interface section 47 has a scart jack 47a, a first I²C bus 47b for connecting controlling section 34 of the TV and scart jack 47a and a second I²C bus 47c for connecting controlling section 44 of the VCR and scart jack 47a.

Further identical to the first embodiment, interface section 47 may belong to the construction of the TV side or of the VCR side.

In FIG. 8, since the starting time information and ending time information of the desired program are included in the VPS signal detected in VPS decoder 41, it is unnecessary to be supplied with the informations from the TV side.

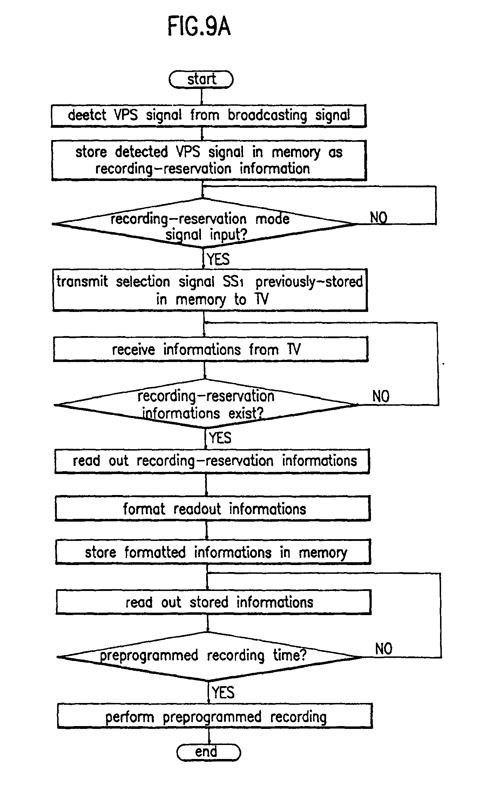

FIG. 9A is a flow chart showing a case that required recording-reservation informations are supplied from the TV to VCR by means of selection signal SS₁ already stored within the VCR having the VPS function, which shows the system program of the VCR side solely.

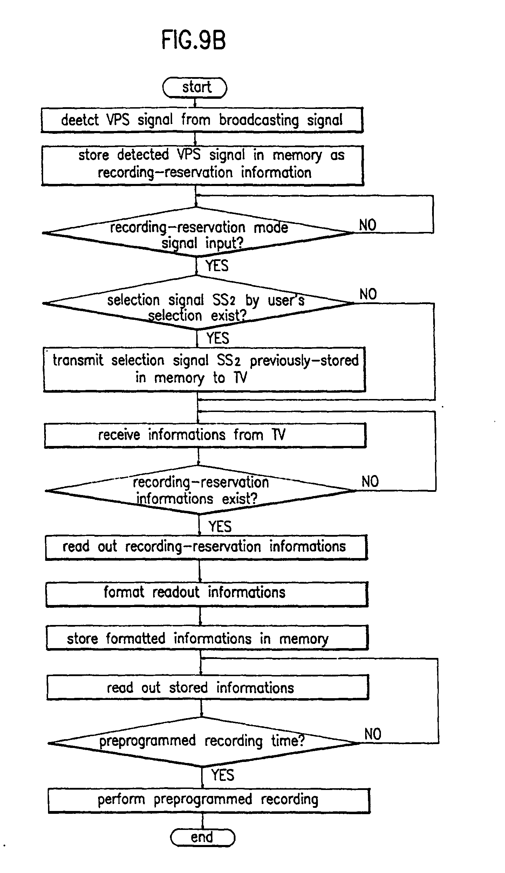

FIG. 9B is a flow chart showing a case that required recording-reservation informations are supplied from the TV to VCR by means of selection signal SS₂ or SS₃ provided by the user's selection, which shows the system program of the VCR side solely.

Substantially, the system program of the TV side is the same as the first embodiment showing the case that the method according to the present invention is adapted to the VCR having the simple function, of which detailed description will thus be omitted (refer to FIGS. 4A and 6A).

Referring to FIG. 9A, controlling section 44 of the VCR receives the broadcasting signals in order via tuner 37.

Then, the VPS signal is detected from each broadcasting signal to store the result in memory 42 in advance as recording-reservation information.

Successively, controlling section 44 of VCR checks whether a signal of recording reservation mode is received from the TV or not.

Upon the input of the recording reservation mode, selection signal SS, previously stored in memory 42 of FIG. 8 is transmitted to controlling section 34 of the TV after sequentially passing through second I²C bus 47c, scart jack 47a and first I²C bus 47b.

At this time, selection signal SS₁ is the signal for announcing that the VCR has the VPS function.

Since the VPS signal has the starting time information and ending time information of the desired broadcasting program as described above, the TV supplies the date information, conceal data which is the initial recognition information of the desired broadcasting program and channel tuning information in the detected teletext data to the VCR in conformity with the system program as shown in FIG. 4A.

The VPS signal can be changed in accordance with the circumstances of the broadcasting station, and the teletext data also involves the changed information. Therefore, the TV provides such conceal data to the VCR having the VPS function so as to prevent an error.

Successively, controlling section 44 of the VCR receives the informations transmitted from the TV to check whether the recording-reservation informations exist in the received informations.

If exist, the informations are read out by controlling section 44 to be formatted in a desired form prior to being stored in memory 42.

After this, controlling section 44 of the VCR reads out the stored recording-reservation informations to check whether the current time becomes the preprogrammed recording time.

Upon reaching the preprogrammed recording time, the reserved recording is executed in accordance with the stored recording-reservation information.

This embodiment assumes the case that the VPS broadcasting signal is necessarily included in the broadcasting signal.

However, selection signal SS₁ may be supplied to controlling section 34 of the TV to enable the reception of the starting time information and ending time information of the desired broadcasting program from the TV by considering a case that the VPS signal is not included in the broadcasting signal due to a circumstance of the broadcasting station.

Referring to FIG. 9B, controlling section 44 of the VCR receives the broadcasting signals via antenna ANT4 and tuner 37 to detect the VPS signal from each broadcasting signal.

Since the detected VPS signals include the starting time information and ending time information of the broadcasting program desired to be recorded, they are stored in memory 42 as the recording-reservation informations in accordance with the memory control signal from controlling section 44.

Then, it is checked whether the signal of recording reservation mode is present from controlling section 34 of the TV or not.

If the signal of recording reservation mode is received, it is checked whether selection signal SS₂ resulting from the user's selection exists or not after elapsing a prescribed time.

At this time, the detected teletext data will be displayed on the TV screen (or monitor).

As described above, after watching the displayed teletext data (more specifically, TV guide information), the user provides the key signal for generating selection signal SS₂ or SS₃ to controlling section 34 of the TV via the key section or remote controller of the TV (or VCR).

When selection signal SS₂ is absent even after elapsing the prescribed time, controlling section 44 of the VCR regards that the user directly provides selection signal SS₃ to controlling section 34 of the TV to detect the informations from the TV.

If selection signal SS₂ exists within the prescribed time, it is regarded that the user provides selection signal SS₂ to the TV via the VCR. Thus, selection signal SS₂ is transmitted to controlling section 34 of the TV via scart jack 47a of interface section 47.

Then, the VCR checks whether the recording-reservation informations exist in the informations received from the TV.

If exist, the informations are read out to be formatted in the desired recording-reservation form, and stored in memory 42.

Thereafter, controlling section 44 of the VCR reads out the stored recording-reservation informations to check whether the time becomes the preprogrammed recording time or not.

When reaching the preprogrammed recording time, controlling section 44 carries out the recording of the reserved program.

### Third Embodiment

The third embodiment shows a case that the method according to the present invention is adapted to the VCR having the ACMS function.

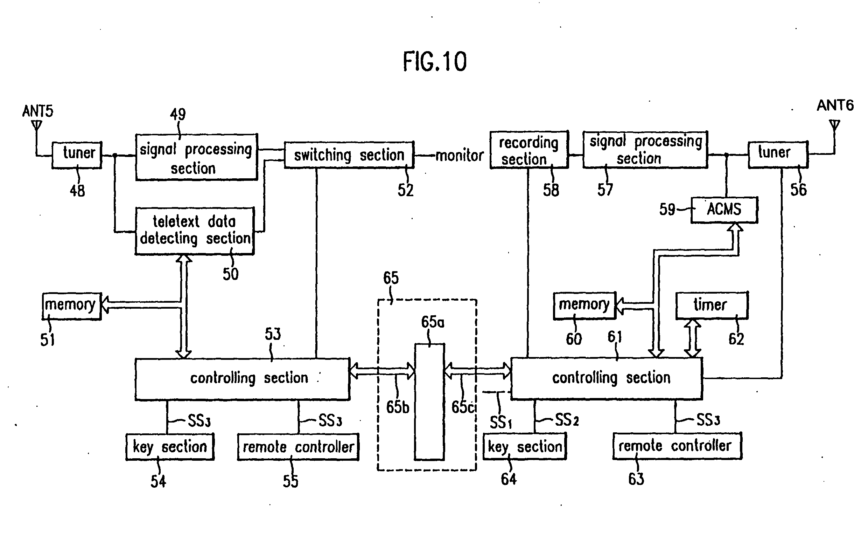

FIG. 10 is a block diagram showing a construction of the TV, VCR and bilateral communicating interface section for connecting them according to the third embodiment.

Referring to FIG. 10, the TV includes an antenna ANT5, a tuner 48, a signal processor 49, a teletext data detecting section 50, a memory 51, a switching section 52, a controlling section 53, a key section 54 and a remote controller 55.

The construction of the TV shown in FIG. 10 is the same as that shown in FIG. 3 according to the first embodiment, of which detailed description will thus be omitted.

In FIG. 10, interface section 65 has the same function and construction as interface section 28 shown in FIG. 3, of which detailed description will thus be omitted.

As shown in FIG. 10, the VCR includes an antenna ANT6, and a tuner 56 for tuning a single broadcasting signal among the broadcasting signals received via antenna ANT6 in accordance with a tuning control signal. Besides, a signal processing section 57 processes the tuned broadcasting to be displayed, and a recording section 58 records the displayably-processed broadcasting signal on one recording medium. An ACMS 59 automatically maps channels of the broadcasting signals tuned via tuner 56 to be suited to a corresponding area by a mapping control signal to provide mapped channel tuning data, and a memory 60 stores the channel tuning data from ACMS 59 and recording-reservation informations transmitted from the TV in accordance with a memory control signal. The memory control signal, mapping control signal and tuning control signal are supplied by a controlling section 61. A timer 62 provides time information to controlling section 61. Additionally, the VCR includes a remote controller 63 for supplying a key signal for generating selection signal SS₂ to controlling section 61 by the user's selection in the radio transmission pattern and a key section 64 for providing the key signal for generating selection signal SS₂ to controlling section 61 through wired connection by the user's selection.

Selection signals SS₁∼SS₃ are already described in the first and second embodiments, of which detailed description will thus be omitted.

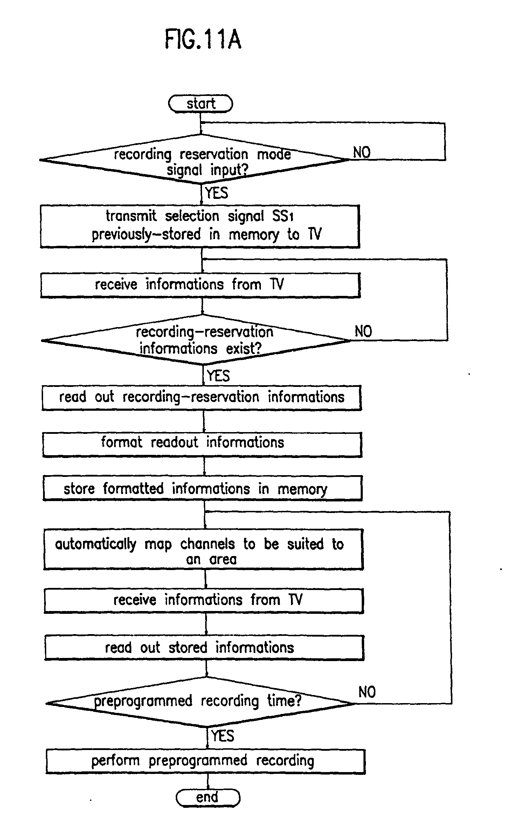

FIG. 11A is a flow chart showing a case that required recording-reservation informations are supplied from the TV to VCR by means of selection signal SS₁ previously-stored in the VCR having the ACMS function, which shows the system program of the VCR side.

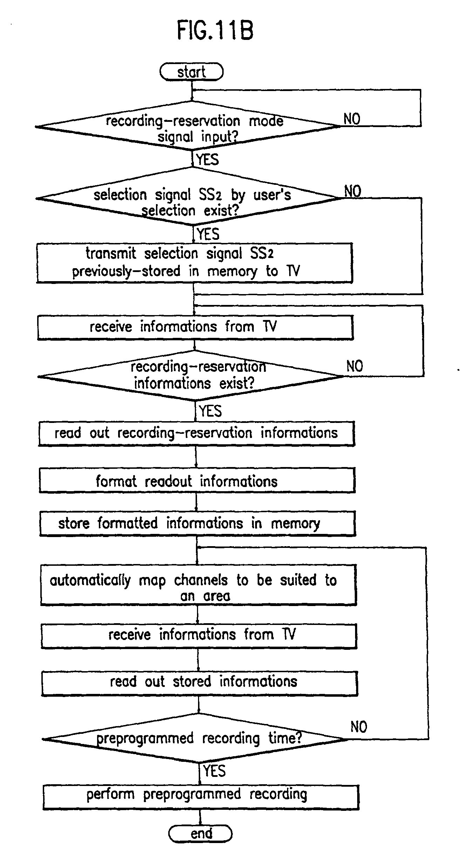

FIG. 11B is a flow chart showing a case that required recording-reservation informations are supplied from the TV to VCR by means of selection signal SS₂ or SS₃ provided by the user's selection, which shows the system program of the VCR side solely.

Substantially, the system program of the TV side is the same as the first embodiment, of which detailed description will thus be omitted (refer to FIGS. 4A and 6A).

Referring to FIG. 11A, controlling section 61 of the VCR checks whether a signal of recording reservation mode is received from the TV or not.

Upon the input of the recording reservation mode, selection signal SS₁ previously stored in memory 60 of FIG. 10 is transmitted to controlling section 53 of the TV after sequentially passing through second I²C bus 65c, scart jack 65a and first I²C bus 65b.

At this time, selection signal SS₁ is the signal for announcing that the VCR has the ACMS function.

Since ACMS 59 of FIG. 10 can make the mapped channel tuning data as described above, it is unnecessary to receive the channel tuning data from the TV.

Accordingly, the TV supplies just the recording-reservation informations such as broadcasting station recognition information, date information, and starting time information and ending time information of a desired broadcasting program required for the VCR having the ACMS function to the VCR in conformity with the system program as shown in FIG. 4A.

Successively, controlling section 61 of the VCR receives the informations transmitted from the TV to check whether the recording-reservation informations exist in the received informations.

If exist, the informations are read out by controlling section 61 to be formatted in a desired form prior to being stored in memory 60.

After this, ACMS 59 is utilized to automatically map channels of the broadcasting signals to be suited to the corresponding area, form the mapped channel tuning data, and store the mapped channel tuning data in memory 60 as one recording-reservation information.

Thereafter, controlling section 61 of the VCR reads out the stored recording-reservation informations to check whether the current time is the preprogrammed recording time or not.

Upon reaching the preprogrammed recording time, the reserved recording is executed in accordance with the stored recording-reservation information.

Referring to FIG. 11B, controlling section 61 of the VCR checks whether the signal of recording reservation mode is present from controlling section 53 of the TV or not.

If the signal of recording reservation mode is received, it is checked whether selection signal SS₂ resulting from the user's selection exists or not after elapsing a prescribed time.

At this time, the detected teletext data (more specifically, TV guide information) will be displayed on the TV screen (or monitor).

As described above, after watching the displayed teletext data, the user provides the key signal for generating selection signal SS₂ or SS₃ to controlling section 53 of the TV via the key section or remote controller of the TV (or VCR).

When selection signal SS₂ is absent even after elapsing the prescribed time, controlling section 61 of the VCR regards that the user directly provides selection signal SS₃ to controlling section 53 of the TV to receive the informations from the TV.

If selection signal SS₂ exists within the prescribed time, it is regarded that the user provides selection signal SS₂ to the TV via the VCR. Thus, selection signal SS₂ is transmitted to controlling section 53 of the TV via scart jack 65a of interface section 65.

Then, the VCR checks whether the recording-reservation informations, i.e., broadcasting station recognition information, date information and starting time information and ending time information of the desired broadcasting program exist in the informations received from the TV.

If exist, the informations are read out to be formatted in the desired form, and stored in memory 60.

Furthermore, ACMS 59 is utilizes to automatically map the channels of the broadcasting signals sequentially received via tuner 56 to be suited to the corresponding area, thereby forming the mapped channel tuning data.

The mapped channel tuning data is stored in memory 60 as one recording-reservation information.

Thereafter, controlling section 61 of the VCR reads out the stored recording-reservation information to check whether the time is the preprogrammed recording time.

When reaching the preprogrammed recording time, controlling section 61 carries out the recording of the reserved program.

### Fourth Embodiment

The fourth embodiment shows a case that the method according to the present invention is adapted to the VCR having both VPS and ACMS functions.

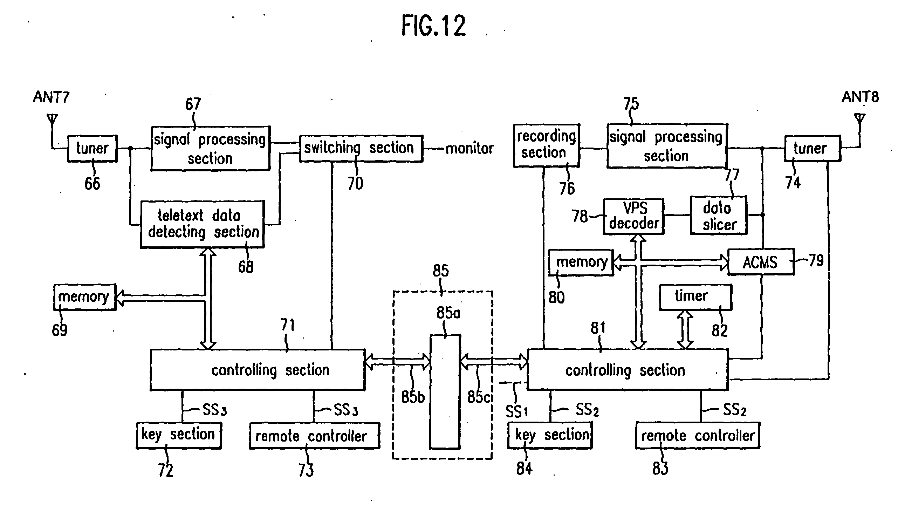

FIG. 12 is a block diagram showing a construction of the TV, VCR and interface section for connecting them according to the fourth embodiment.

Referring to FIG. 12, the TV adapted according to the present invention includes an antenna ANT7, a tuner 66, a signal processor 67, a teletext data detecting section 68, a memory 69, a switching section 70, a controlling section 71, a key section 72 and a remote controller 73.

The construction of the TV shown in FIG. 12 is substantially identical to that shown in FIG. 3 according to the first embodiment.

Therefore, the detailed description of the construction of the TV will thus be omitted.

As shown in FIG. 12, the VCR includes an antenna ANT8, and a tuner 74 for tuning a single broadcasting signal among the broadcasting signals received via antenna ANT8 in accordance with a tuning control signal. Besides, a signal processing section 75 processes the tuned broadcasting to be recordable, and a recording section 58 records the broadcasting signal from signal processing section 75 on a recording medium. A data slicer 77 slices the tuned broadcasting signal, and a VPS decoder 78 detects a VPS signal (which is typically included in the 16th line of the broadcasting signal) from the sliced broadcasting signal by means of a decoding control signal. An ACMS 79 automatically maps the broadcasting signals sequentially tuned via tuner 74 to be suited to a corresponding area by a mapping control signal to provide mapped channel tuning data, and a memory 80 stores the VPS signal, mapped channel tuning data and recording-reservation informations transmitted from the TV in accordance with a memory control signal. The above-stated decoding control signal, memory control signal, mapping control signal and previously-stored selection signal SS₁ are supplied by a controlling section 81. A timer 82 provides time information to controlling section 81 when the VPS signal is absent. Additionally, the VCR includes a remote controller 83 for supplying a key signal for generating selection signal SS₂ to controlling section 81 by the user's selection in the radio transmission pattern and a key section 84 for providing the key signal for generating selection signal SS₂ to controlling section 81 through wired connection by the user's selection.

Identical to the first embodiment, interface section 85 has a scart jack 85a, a first I²C bus 85b for connecting controlling section 71 of the TV and scart jack 85a and a second I²C bus 85c for connecting controlling section 81 of the VCR and scart jack 85a.

Further identical to the first embodiment, interface section 85 may belong to the construction of the TV or of the VCR.

In FIG. 12, since the starting time information and ending time information of the desired program is included in the VPS signal detected in VPS decoder 78, it is unnecessary to be supplied with such informations from the TV side.

Moreover, since the channel tuning data is formed by ACMS 79, it is unnecessary to be supplied with the channel tuning data from the TV, either.

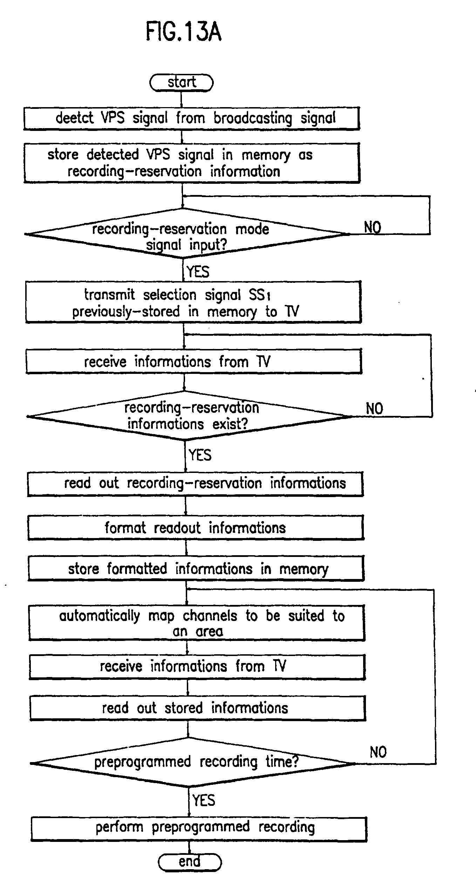

FIG. 13A is a flow chart showing a case that required recording-reservation informations are supplied from the TV to VCR by means of selection signal SS₁ supplied intrinsically from the VCR having both VPS and ACMS functions, which shows the system program of the VCR side solely.

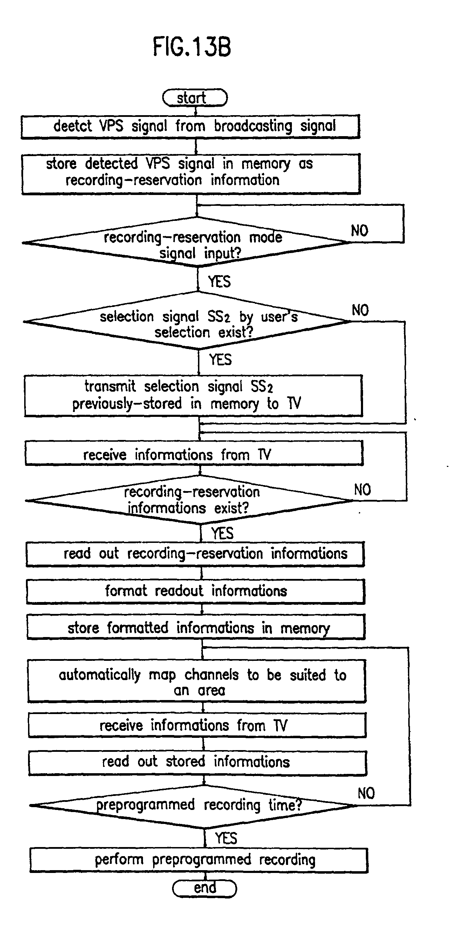

FIG. 13B is a flow chart showing a case that required recording-reservation informations are supplied from the TV to VCR having the VPS and ACMS functions in accordance with selection signal SS₂ or SS₃ provided by the user's selection, which shows the system program of the VCR side solely.

Substantially, the system program of the TV side is the same as the first embodiment which shows a case that the method of the present invention is adapted to the VCR having the simple function, of which detailed description will thus be omitted (refer to FIGS. 4A and 6A).

Referring to FIG. 13A, controlling section 81 of the VCR receives the broadcasting signals in order via tuner 74 to detect the VPS signal from each broadcasting signal to store the result in memory 80 as the recording-reservation information in advance.

Successively, controlling section 81 of the VCR checks whether a signal of recording reservation mode is received from the TV or not.

Upon the input of the recording reservation mode, selection signal SS₁ previously stored in memory 80 of FIG. 12 is transmitted to controlling section 71 of the TV after sequentially passing through second I²C bus 85c, scart jack 85a and first I²C bus 85b.

At this time, selection signal SS₁ is the signal for announcing that the VCR has the VPS and ACMS functions.

Since the VPS signal has the starting time information and ending time information of the desired broadcasting program as described above, the TV supplies broadcasting station recognition information, date information and conceal data being the initial recognition information of the desired broadcasting program in the teletext data stored in the VCR in conformity with the system program as shown in FIG. 4A.

The VPS signal can be changed in accordance with the circumstances of the broadcasting station, and the teletext data involves the changed information. Therefore, the TV further provides the conceal data to the VCR having the VPS function so as to prevent an error.

Successively, controlling section 81 of the VCR receives the informations transmitted from the TV to check whether the recording-reservation informations, i.e., broadcasting station recognition information, date information and conceal data being the initial recognition information of the desired broadcasting program exist in the received informations or not.

If exist, the informations are read out by controlling section 81 to be formatted in a desired form prior to being stored in memory 80.

After this, ACMS 79 is utilized to automatically map channels of the broadcasting signals sequentially received via tuner 74 to be suited to the corresponding area, thereby forming the mapped channel tuning data.

Then, the mapped channel tuning data is stored in memory 80 as one recording-reservation information.

Thereafter, controlling section 81 of the VCR reads out the stored recording-reservation informations to check whether the current time is the preprogrammed recording time or not.

Upon reaching the preprogrammed recording time, the reserved recording is executed in accordance with the stored recording-reservation information.

In this embodiment, it is assumed that the VPS broadcasting signal is necessarily included in the broadcasting signal.

However, by considering a case that the VPS signal is not included in the broadcasting signal due to a circumstance of the broadcasting station, selection signal SS₁ may be supplied to controlling section 81 of the TV to enable the reception of the starting time information and ending time information of the desired broadcasting program from the TV.

Referring to FIG. 13B, controlling section 81 of the VCR receives the broadcasting signals in order via antenna ANT8 and tuner 74 to detect the VPS signal from each broadcasting signal.

Since the detected VPS signals include the starting time information and ending time information of the broadcasting program desired to be recorded, they are stored in memory 80 as the recording-reservation informations by means of the memory control signal from controlling section 81.

Successively, it is checked whether the signal of recording reservation mode is present from controlling section 71 of the TV or not.

If the signal of recording reservation mode is received, it is checked whether selection signal SS₂ resulting from the user's selection exists or not after elapsing a prescribed time.

At this time, the detected teletext data will be displayed on the TV screen (or monitor).

As described above, after watching the displayed teletext data (more specifically, TV guide information), the user provides the key signal for generating selection signal SS₂ or SS₃ to controlling section 71 of the TV via the key section or remote controller of the TV (or VCR).

When selection signal SS₂ is absent even after elapsing the prescribed time, controlling section 81 of the VCR regards that the user directly provides selection signal SS₃ to controlling section 71 of the TV to detect the informations from the TV.

If selection signal SS₂ exists within the prescribed time, it is regarded that the user provides selection signal SS₂ to the TV via the VCR. Thus, selection signal SS₂ is transmitted to controlling section 71 of the TV via scart jack 85a of interface section 85.

Then, the VCR checks whether the recording-reservation informations exist in the informations received from the TV.

If exist, the informations are read out to be formatted in the desired form, and stored in memory 80.

After this, controlling section 81 utilizes ACMS 79 to automatically map the channels of the broadcasting signals sequentially received via tuner 74 to be suited to the corresponding area, thereby forming the mapped channel tuning data.

The mapped channel tuning data is stored in memory 80 as one recording-reservation information.

Thereafter, controlling section 81 of the VCR reads out the stored recording-reservation information to check whether the time is the preprogrammed recording time.

When reaching the preprogrammed recording time, controlling section 81 carries out the recording of the reserved program.

As described with reference to the first to fourth embodiments, the present invention has the following advantages.

First, the recording-reservation data is supplied from the TV to VCR without separately equipping expensive elements such as the VPS decoder, ACMS and teletext decoder into the construction of the VCR, thereby significantly lowering manufacturing cost of the VCR.

Second, regardless of the kind of the VCR, the recording-reservation data required for the VCR can be supplied from the TV being the main subject to be able to afford compatibility.

Third, since all recording-reservation data can be provided from the TV, it is convenient for a user to preprogram the recording.

That is, in the conventional recording reservation method in which the VCR is the main subject, the user must power on the VCR as well as the TV to watch the TV guide information, and both key sections of the TV and VCR must be manipulated. However, in the method according to the present invention, the recording reservation mode can be carried out only by manipulating the TV without turning on the power of the VCR, so that the method is convenient to be utilized.

While the present invention has been particularly shown and described with reference to particular embodiment thereof, it will be understood by those skilled in the art that various changes in form and details may be effected therein without departing from the scope of the invention as defined by the appended claims.

## Claims

1. A method for providing timer recording information to a video recorder by using a television signal receiver, comprising the steps of:
receiving broadcasting signals in said television signal receiver;
detecting teletext data comprising a plurality of program guide information from said received broadcasting signals;
storing the detected plurality of program guide information in a memory (15, 32, 51, 69) of said television signal receiver; **characterized by**
transmitting at least one of the stored plurality of program guide information to said video recorder as timer recording information in accordance with selection signals (SS₁, SS₂ ; SS₃) supplied to a controlling section of the television signal receiver, the selection signals comprising a signal (SS₁) based on the function of the video recorder and users selection signals (SS₂, SS₃) ; and
storing said transmitted program guide information in a memory (23, 42, 60, 80) of said video recorder.

2. A method as claimed in claim 1, wherein the plurality of program guide information include date information, starting time information and ending time information of a broadcasting program, and channel tuning information of said broadcasting program.

3. A method as claimed in claim 1 or 2, wherein said at least one of the stored plurality of program guide information to said video recorder is transmitted when user's setting for the timer recording is completed in said television signal receiver.

4. A method as claimed in any of claims 1 to 3, further including displaying said program guide information stored in said memory (15, 32, 51, 69) of said television signal receiver.

5. An apparatus for providing timer recording information to a video recorder using a television signal receiver, comprising:
a tuner (12, 29, 48, 66) for receiving broadcasting signals in said television signal receiver;
a detecting section (14, 31, 50, 68) for detecting teletext data comprising a plurality of program guide information from said received broadcasting signals in said television signal receiver; a first memory (15, 32, 51, 69) for storing the detected plurality of program guide information in said television signal receiver; **characterized by**
a first controlling section (17, 34, 53, 71) in said television signal receiver for controlling to transmit at least one of the stored plurality of program guide information to said video recorder as timer recording information in accordance with selection signals supplied to said first controlling section of the television signal receiver, the selection signals comprising a signal (SS₁) based on the function of the video recorder and users selection signals (SS₂, SS₃) ; a second controlling section (25, 44, 61, 81) in said video recorder, for receiving said transmitted program guide information from the first controlling section; and
a second memory (23, 42, 60, 80) for storing said transmitted program guide information in said video recorder.

6. An apparatus as claimed in claim 5, wherein the first controlling section (17, 34, 53, 71) transmits at least one of the stored plurality of program guide information to said video recorder when user's setting for the timer recording is completed in said television signal receiver.

7. An apparatus as claimed in claim 5 or 6, further including interface section (28, 47, 65, 85) connected between the first controlling section (17, 34, 53, 71) and the second controlling section (25, 44, 61, 81) for transmitting the timer recording information from the first controlling section (17, 34, 53, 71) to the second controlling section (25, 44, 61, 81).

8. An apparatus as claimed in any of claims 5 to 7, further including a monitor for displaying said program guide information stored in the first memory (17, 34, 53, 71).

9. A method for providing timer recording information to a video recorder using television signal receiver as claimed in claim 2, further comprising: displaying said program guide information stored in a memory of said television signal receiver.

10. A television comprising:
receiving means (1, 12, 29, 48, 66) for receiving a broadcasting signal ;
detecting means (2, 14, 31, 50, 68) for detecting teletext data comprising a plurality of program guide information from said received broadcasting signal ;
memory means (3, 15, 32, 51, 69) for storing said detected plurality of program guide information; **characterized by**
controlling means (4, 17, 34, 53, 71) for providing predetermined information among date information, starting time information and ending time information of a broadcasting program, and channel tuning information of said broadcasting program as timer recording information to said video recorder in accordance with a selection signal (SS₁) supplied to the television from the video recorder, said selection signal (SS₁) based on a function of said video recorder; and interface means (7, 28, 47, 65, 85) for transmitting the predetermined information from said memory to said video recorder.

11. A television as claimed in claim 10, wherein said interface means comprises:
a bilateral communicating jack (7a, 28a, 47a, 65a, 85a);
a first bilateral communicating bus (7b, 28b, 47b, 65b, 85b) for connecting said controlling means and said bilateral communicating jack; and
a second bilateral communicating bus (7c, 28c, 47c, 65c, 85c) for connecting said bilateral communicating jack and said video recorder.

12. A television as claimed in claim 10, wherein said interface means comprises:
a radio signal transmitting section (7d) connected to said controlling means for allowing said timer recording of said video recorder to have a radio signal form to be transmitted to said video recorder; and
a radio signal receiving section (7f) for receiving the selection signal from the video recorder side.

13. A television as claimed in claim 12, wherein said radio signal is an infrared ray signal.

14. A television as claimed in any of claims 10 to 13, further comprising:
a monitor for displaying said program guide information stored in said memory means (3, 15, 32, 51, 69);
a key section (18, 35, 54, 72) for supplying a key signal for generating said selection signal in said displayed program guide information to said controlling means (4, 17, 34, 53).

15. A video recorder **characterized by**
interface means (7, 28, 47, 65, 85) for transmitting a selection signal (SS₁) to a television signal receiver, said selection signal being based on a function of said video recorder, and receiving from the television predetermined information among date information,
starting time information and ending time information of a broadcasting program, and channel tuning information of said broadcasting program as timer recording information to the video recorder in accordance with said selection signal supplied to said television signal receiver; and
memory means (5, 23, 42, 60, 80) for storing a received information from said television signal receiver in accordance with a memory control signal;
controlling means (6, 25, 44, 61, 81) for supplying said selection signal to said television signal receiver via interface means, and supplying the memory control signal to said memory means.

16. A video recorder as claimed in claim 15, wherein said interface means comprises:
a bilateral communicating jack (7a, 28a, 47a, 65a, 85a);
a first bilateral communicating bus (7b, 28b, 47b, 65b, 85b) for connecting said bilateral communicating jack and the television signal receiver side; and
a second bilateral communicating bus (7c, 28c, 47c, 65c, 85c) for connecting said controlling means and bilateral communicating jack.

17. A video recorder as claimed in claim 15, wherein said interface means comprises:
a radio signal transmitting section (7j) for allowing said selection signal to have a radio signal form to transmit the result to said television signal receiver; and
a radio signal receiving section (7h) of receiving at least one timer recording information transmitted in said radio signal form from said television signal receiver side.

18. A video recorder as claimed in claim 17, wherein said radio signal is an infrared

19. A video recorder as claimed in claim 15, further comprising:
a key section (8) for supplying a key signal for generating said selection signal by the user's selection to said controlling means.

## Patentansprüche

1. Verfahren zur Bereitstellung von Zeitsteuerungsaufnahmeinformationen an einen Videorekorder unter Verwendung eines Fernsehsignalempfängers, das die folgenden Schritte aufweist:
Empfangen von Ausstrahlungssignalen in dem Fernsehsignalempfänger;
Erfassen von Teletextdaten, die mehrere Programmübersichtsinformationen aufweisen, aus den empfangenen Ausstrahlungssignalen;
Speichern der erfassten mehreren Programmübersichtsinformationen in einem Speicher (15, 32, 51, 69) des Fernsehsignalempfängers; **gekennzeichnet durch**
Senden wenigstens einer der gespeicherten mehreren Programmübersichtsinformationen an den Videorekorder als Zeitsteuerungsaufnahmeinformationen entsprechend Auswahlsignalen (SS₁, SS₂, SS₃), die an einen Steuerabschnitt des Fernsehsignalempfängers geliefert werden, wobei die Auswahlsignale ein Signal (SS₁) aufweisen, das auf der Funktion der Videorekorder- und Benutzerauswahlsignale (SS₂, SS₃) basiert; und
Speichern der gesendeten Programmübersichtsinformationen in einem Speicher (23, 42, 60, 80) des Videorekorders.

2. Verfahren nach Anspruch 1, wobei die mehreren Programmübersichtsinformationen Datumsinformationen, Startzeitinformationen und Endzeitinformationen eines Ausstrahlungsprogramms und Kanalauswahlinformationen des Ausstrahlungsprogramms umfassen.

3. Verfahren nach Anspruch 1 oder 2, wobei wenigstens eine der gespeicherten mehreren Programmübersichtsinformationen an den Videorekorder gesendet wird, wenn die Benutzereinstellung für die Zeitsteuerungsaufnahme in dem Fernsehsignalempfänger abgeschlossen ist.

4. Verfahren nach einem der Ansprüche 1 bis 3, das ferner das Anzeigen der in dem Speicher (15, 32, 51, 69) des Fernsehsignalempfängers gespeicherten Programmübersichtsinformationen umfasst.

5. Vorrichtung zur Bereitstellung von Zeitsteuerungsaufnahmeinformationen an einen Videorekorder unter Verwendung eines Fernsehsignalempfängers, die aufweist:
einen abstimmbaren Empfänger (12, 29, 48, 66) zum Empfangen von Ausstrahlungssignalen in dem Fernsehsignalempfänger;
einen Erfassungsabschnitt (14, 31, 50, 68) zum Erfassen von Teletextdaten, die mehrere Programmübersichtsinformationen aufweisen, aus den empfangenen Ausstrahlungssignalen in dem Fernsehsignalempfänger;
einen ersten Speicher (15, 32, 51, 69) zum Speichern der erfassten mehreren Programmübersichtsinformationen in dem Fernsehsignalempfänger; **gekennzeichnet durch**
einen ersten Steuerabschnitt (17, 34, 53, 71) in dem Fernsehsignalempfänger zum Steuern des Sendens wenigstens einer der gespeicherten mehreren Programmübersichtsinformationen an den Videorekorder als Zeitsteuerungsaufnahmeinformationen entsprechend Auswahlsignalen, die an den ersten Steuerabschnitt des Fernsehsignalempfängers geliefert werden, wobei die Auswahlsignale ein Signal (SS₁) aufweisen, das auf der Funktion der Videorekorder- und Benutzerauswahlsignale (SS₂, SS₃) basiert; und
einen zweiten Steuerabschnitt (25, 44, 61, 81) in dem Videorekorder zum Empfangen der gesendeten Programmübersichtsinformationen von dem ersten Steuerabschnitt; und
einen zweiten Speicher (23, 42, 60, 80) zum Speichern der gesendeten Programmübersichtsinformationen in dem Videorekorder.

6. Vorrichtung nach Anspruch 5, wobei der erste Steuerabschnitt (17, 34, 53, 71) wenigstens eine der gespeicherten mehreren Programmübersichtsinformationen an den Videorekorder sendet, wenn die Benutzereinstellung für die Zeitsteuerungsaufnahme in dem Fernsehsignalempfänger abgeschlossen ist.

7. Vorrichtung nach Anspruch 5 oder 6, die ferner einen Schnittstellenabschnitt (28, 47, 65, 85) umfasst, der zwischen den ersten Steuerabschnitt (17, 34, 53, 71) und den zweiten Steuerabschnitt (25, 44, 61, 81) geschaltet ist, um die Zeitsteuerungsaufnahmeinformationen von dem ersten Steuerabschnitt (17, 34, 53, 71) an den zweiten Steuerabschnitt (25, 44, 61, 81) zu senden.

8. Vorrichtung nach einem der Ansprüche 5 bis 7, die ferner einen Monitor zum Anzeigen der in dem ersten Speicher (17, 34, 53, 71) gespeicherten Programmübersichtsinformationen umfasst.

9. Verfahren zur Bereitstellung von Zeitsteuerungsaufnahmeinformationen an einen Videorekorder unter Verwendung eines Fernsehsignalempfängers nach Anspruch 2, das ferner aufweist: Anzeigen der in einem Speicher des Fernsehsignalempfängers gespeicherten Programmübersichtsinformationen.

10. Fernseher, der aufweist:
eine Empfangseinrichtung (1, 12, 29, 48, 66) zum Empfangen eines Ausstrahlungssignals;
eine Erfassungseinrichtung (2, 14, 31, 50, 68) zum Erfassen von Teletextdaten, die mehrere Programmübersichtsinformationen aufweisen, aus dem empfangenen Ausstrahlungssignal;
eine Speichereinrichtung (3, 15, 32, 51, 69) zum Speichern der erfassten mehreren Programmübersichtsinformationen; **gekennzeichnet durch**
eine Steuereinrichtung (4, 17, 34, 53, 71) zum Bereitstellen vorbestimmter Informationen aus Datumsinformationen, Startzeitinformationen und Endzeitinformationen eines Ausstrahlungsprogramms und Kanalauswahlinformationen des Ausstrahlungsprogramms als Zeitsteuerungsaufnahmeinformationen an den Videorekorder entsprechend einem Auswahlsignal (SS₁), das von dem Videorekorder an den Fernseher geliefert wird, wobei das Auswahlsignal (SS₁) auf einer Funktion des Videorekorders basiert; und
eine Schnittstelleneinrichtung (7, 28, 47, 65, 85) zum Senden der vorbestimmten Informationen von dem Speicher an den Videorekorder.

11. Fernseher nach Anspruch 10, wobei die Schnittstelleneinrichtung aufweist:
einen bilateralen Kommunikationsstecker (7a, 28a, 47a, 65a, 85a);
einen ersten bilateralen Kommunikationsbus (7b, 28b, 47b, 65b, 85b) zum Verbinden der Steuereinrichtung und des bilateralen Kommunikationssteckers; und
einen zweiten bilateralen Kommunikationsbus (7c, 28c, 47c, 65c, 85c) zum Verbinden des bilateralen Kommunikationssteckers und des Videorekorders.

12. Fernseher nach Anspruch 10, wobei die Schnittstelleneinrichtung aufweist:
einen Funksignalsendeabschnitt (7d), der mit der Steuereinrichtung verbunden ist, um die Zeitsteuerungsaufnahme des Videorekorders zuzulassen, um eine Funksignalform zu haben, die an den Videorekorder gesendet werden soll; und
einen Funksignalempfangsabschnitt (7f) zum Empfangen des Auswahlsignals von der Videorekorderseite.

13. Fernseher nach Anspruch 12, wobei das Funksignal ein Infrarotstrahlensignal ist.

14. Fernseher nach einem der Ansprüche 10 bis 13, der ferner aufweist:
einen Monitor zum Anzeigen der in der Speichereinrichtung (3, 15, 32, 51, 69) gespeicherten Programmübersichtsinformationen;
einen Schlüsselabschnitt (18, 35, 54, 72) zum Liefern eines Schlüsselsignals zum Erzeugen des Auswahlsignals in den angezeigten Programmübersichtsinformationen an die Steuereinrichtung (4, 17, 34, 53).

15. Videorekorder, **gekennzeichnet durch**
eine Schnittstelleneinrichtung (7, 28, 47, 65, 85) zum Senden eines Auswahlsignals (SS₁) an einen Fernsehsignalempfänger, wobei das Auswahlsignal auf einer Funktion des Videorekorders basiert, und zum Empfangen vorbestimmter Informationen aus Datumsinformationen, Startzeitinformationen und Endzeitinformationen eines Ausstrahlungsprogramms, und Kanalauswahlinformationen des Ausstrahlungsprogramms als Zeitsteuerungsaufnahmeinformationen von dem Fernseher an den Videorekorder entsprechend dem Auswahlsignal, das an den Fernsehsignalempfänger geliefert wird; und
eine Speichereinrichtung (5, 23, 42, 60, 80) zum Speichern einer von dem Fernsehsignalempfänger empfangenen Information entsprechend einem Speichersteuersignal;
eine Steuereinrichtung (6, 25, 44, 61, 81) zum Liefern des Auswahlsignals über die Schnittstelleneinrichtung an den Fernsehsignalempfänger und Liefern des Speichersteuersignals an die Speichereinrichtung.

16. Videorekorder nach Anspruch 15, wobei die Schnittstelleneinrichtung aufweist:
einen bilateralen Kommunikationsstecker (7a, 28a, 47a, 65a, 85a);
einen ersten bilateralen Kommunikationsbus (7b, 28b, 47b, 65b, 85b) zum Verbinden des bilateralen Kommunikationssteckers und der Fernsehsignalempfängerseite; und
einen zweiten bilateralen Kommunikationsbus (7c, 28c, 47c, 65c, 85c) zum Verbinden der Steuereinrichtung und des bilateralen Kommunikationssteckers.

17. Videorekorder nach Anspruch 15, wobei die Schnittstelleneinrichtung aufweist:
einen Funksignalsendeabschnitt (7j), um zuzulassen, dass das Auswahlsignal eine Funksignalform hat, um das Ergebnis an den Fernsehsignalempfänger zu senden; und
einen Funksignalempfangsabschnitt (7h) zum Empfangen wenigstens einer Zeitsteuerungsaufnahmeinformation, die in der Funksignalform gesendet wird, von Fernsehsignalempfängerseite.

18. Videorekorder nach Anspruch 17, wobei das Funksignal ein Infrarotstrahlensignal ist.

19. Videorekorder nach Anspruch 15, der ferner aufweist:
einen Schlüsselabschnitt (8) zum Liefern eines Schlüsselsignals zum Erzeugen des Auswahlsignals durch die Benutzerauswahl an die Steuereinrichtung.

## Revendications

1. Procédé pour fournir des informations d'enregistrement par minuterie à un enregistreur vidéo en utilisant un récepteur de signaux de télévision, comprenant les étapes consistant à :
recevoir des signaux de radiodiffusion dans ledit récepteur de signaux de télévision ;
détecter des données télétexte comprenant une pluralité d'informations de guide de programme à partir desdits signaux de radiodiffusion reçus ;
stocker la pluralité détectée d'informations de guide de programme dans une mémoire (15, 32, 51, 69) dudit récepteur de signaux de télévision ; **caractérisé en ce qu'**il consiste à
transmettre au moins une de la pluralité d'informations de guide de programme stockées audit enregistreur vidéo sous la forme d'informations d'enregistrement par minuterie selon des signaux de sélection (SS₁, SS₂, SS₃) fournis à une section de commande du récepteur de signaux de télévision, les signaux de sélection comprenant un signal (SS₁) basé sur la fonction des signaux de l'enregistreur vidéo et de sélection utilisateur (SS₂, SS₃) ; et
stocker lesdites informations de guide de programme transmises dans une mémoire (23, 42, 60, 80) dudit enregistreur vidéo.

2. Procédé selon la revendication 1, dans lequel la pluralité d'informations de guide de programme comprend une information de date, une information d'heure de début et une information d'heure de fin d'un programme en radiodiffusion, et des informations de réglage de chaîne dudit programme en radiodiffusion.

3. Procédé selon la revendication 1 ou 2, dans lequel ladite au moins une de la pluralité d'informations de guide de programme stockées dans ledit enregistreur vidéo est transmise lorsque le réglage par l'utilisateur de l'enregistrement par minuterie est terminé dans ledit récepteur de signaux de télévision.

4. Procédé selon l'une quelconque des revendications 1 à 3, consistant en outre à afficher lesdites informations de guide de programme stockées dans ladite mémoire (15, 32, 51, 69) dudit récepteur de signaux de télévision.

5. Appareil destiné à fournir des informations d'enregistrement par minuterie à un enregistreur vidéo utilisant un récepteur de signaux de télévision, comprenant :
un syntoniseur (12, 29, 48, 66) pour recevoir les signaux de radiodiffusion dans ledit récepteur de signaux de télévision ;
une section de détection (14, 31, 50, 68) pour détecter des données télétexte comprenant une pluralité d'informations de guide de programme à partir desdits signaux de radiodiffusion reçus dans ledit récepteur de signaux de télévision ;
une première mémoire (15, 32, 51, 69) pour stocker la pluralité détectée d'informations de guide de programme dans ledit récepteur de signaux de télévision ;
**caractérisé par**
une première section de commande (17, 34, 53, 71) dans ledit récepteur de signaux de télévision pour commander la transmission d'au moins une de la pluralité stockée d'informations de guide de programme audit enregistreur vidéo sous la forme d'informations d'enregistrement par minuterie selon les signaux de sélection fournis à ladite première section de commande du récepteur de signaux de télévision, les signaux de sélection comprenant un signal (SS₁) basé sur la fonction des signaux de l'enregistreur vidéo et de sélection utilisateurs (SS₂, SS₃) ;
une seconde section de commande (25, 44, 61, 81) dans ledit enregistreur vidéo, pour recevoir lesdites informations de guide de programme transmises provenant de la première section de commande ; et
une seconde mémoire (23, 42, 60, 80) pour stocker lesdites informations de guide de programme transmises dans ledit enregistreur vidéo.

6. Appareil selon la revendication 5, dans lequel la première section de commande (17, 34, 53, 71) transmet au moins une de la pluralité stockée d'informations de guide de programme audit enregistreur vidéo lorsque le réglage par l'utilisateur de l'enregistrement par minuterie est terminé dans ledit récepteur de signaux de télévision.

7. Appareil selon la revendication 5 ou 6, comprenant en outre une section d'interface (28, 47, 65, 85) connectée entre la première section de commande (17, 34, 53, 71) et la seconde section de commande (25, 44, 61, 81) pour transmettre les informations d'enregistrement par minuterie de la première section de commande (17, 34, 53, 71) à la seconde section de commande (25, 44, 61, 81).

8. Appareil selon l'une quelconque des revendications 5 à 7, comprenant en outre un écran pour afficher lesdites informations de guide de programme stockées dans la première mémoire (17, 34, 53, 71).

9. Procédé pour fournir des informations d'enregistrement par minuterie à un enregistreur vidéo utilisant un récepteur de signaux de télévision selon la revendication 2, consistant en outre à : afficher lesdites informations de guide de programme stockées dans une mémoire dudit récepteur de signaux de télévision.

10. Télévision comprenant :
des moyens de réception (1, 12, 29, 48, 66) pour recevoir un signal de radiodiffusion ;
des moyens de détection (2, 14, 31, 50, 68) pour détecter des données télétexte comprenant une pluralité d'informations de guide de programme à partir dudit signal de radiodiffusion reçu ;
des moyens de mémoire (3, 15, 32, 51, 69) pour stocker ladite pluralité détectée d'informations de guide de programme ; **caractérisée par**
des moyens de commande (4, 17, 34, 53, 71) pour fournir les informations prédéterminées parmi l'information de date, l'information d'heure de début et
l'information d'heure de fin d'un programme en radiodiffusion, et les informations de réglage de chaîne dudit programme en radiodiffusion en tant qu'informations d'enregistrement par minuterie audit enregistreur vidéo selon un signal de sélection (SS₁) fourni à la télévision par l'enregistreur vidéo, ledit signal de sélection (SS₁) étant basé sur une fonction dudit enregistreur vidéo ; et
des moyens d'interface (7, 28, 47, 65, 85) pour transmettre les informations prédéterminées de ladite mémoire audit enregistreur vidéo.

11. Télévision selon la revendication 10, dans laquelle lesdits moyens d'interface comprennent :
une prise jack de communication bilatérale (7a, 28a, 47a, 65a, 85a) ;
un premier bus de communication bilatérale (7b, 28b, 47b, 65b, 85b) pour connecter lesdits moyens de commande et ladite prise jack de communication bilatérale ; et
un second bus de communication bilatérale (7c, 28c, 47c, 65c, 85c) pour connecter ladite prise jack de communication bilatérale et ledit enregistreur vidéo.

12. Télévision selon la revendication 10, dans laquelle lesdits moyens d'interface comprennent :
une section de transmission de signaux radio (7d) connectée auxdits moyens de commande pour permettre audit enregistrement par minuterie dudit enregistreur vidéo d'avoir une forme de signal radio pour transmission audit enregistreur vidéo ; et
une section de réception de signaux radio (7f) pour recevoir le signal de sélection provenant du côté enregistreur vidéo.

13. Télévision selon la revendication 12, dans laquelle ledit signal radio est un signal infrarouge.

14. Télévision selon l'une quelconque des revendications 10 à 13, comprenant en outre :
un écran pour afficher lesdites informations de guide de programme stockées dans lesdits moyens de mémoire (3, 15, 32, 51, 69) ;
une section clé (18, 35, 54, 72) pour fournir un signal clé pour générer ledit signal de sélection dans lesdites informations de guide de programme affichées vers lesdits moyens de commande (4, 17, 34, 53).

15. Enregistreur vidéo **caractérisé par**
des moyens d'interface (7, 28, 47, 65, 85) pour transmettre un signal de sélection (SS₁) à un récepteur de signaux de télévision, ledit signal de sélection étant basé sur une fonction dudit enregistreur vidéo, et recevoir de la télévision des informations prédéterminées parmi l'information de date, l'information d'heure de début et l'information d'heure de fin d'un programme télédiffusé, et les informations de réglage de chaîne dudit programme en télédiffusion sous la forme d'informations d'enregistrement par minuterie à l'enregistreur vidéo selon ledit signal de sélection fourni audit récepteur de signaux de télévision ; et
des moyens de mémoire (5, 23, 42, 60, 80) pour stocker une information reçue dudit récepteur de signaux de télévision selon un signal de commande de mémoire ;
des moyens de commande (6, 25, 44, 61, 81) pour fournir ledit signal de sélection audit récepteur de signaux de télévision par le biais de moyens d'interface, et fournir le signal de commande de mémoire auxdits moyens de mémoire.

16. Enregistreur vidéo selon la revendication 15, dans lequel lesdits moyens d'interface comprennent :
une prise jack de communication bilatérale (7a, 28a, 47a, 65a, 85a) ;
un premier bus de communication bilatérale (7b, 28b, 47b, 65b, 85b) pour connecter ladite prise jack de communication bilatérale et le côté récepteur de signaux de télévision ; et
un second bus de communication bilatérale (7c, 28c, 47c, 65c, 85c) pour connecter lesdits moyens de commande et la prise jack de communication bilatérale.

17. Enregistreur vidéo selon la revendication 15, dans lequel lesdits moyens d'interface comprennent :
une section de transmission de signaux radio (7j) pour permettre audit signal de sélection d'avoir une forme de signal radio pour transmission du résultat audit récepteur de signaux de télévision ; et
une section de réception de signaux radio (7h) pour recevoir au moins une information d'enregistrement par minuterie transmise dans ladite forme de signal radio à partir dudit côté récepteur de signaux de télévision.

18. Enregistreur vidéo selon la revendication 17, dans lequel ledit signal radio est un signal infrarouge.

19. Enregistreur vidéo selon la revendication 15, comprenant en outre :
une section clé (8) pour fournir un signal clé pour générer ledit signal de sélection au moyen de la sélection utilisateur vers lesdits moyens de commande.
